# EUROPÄISCHE PATENTANMELDUNG

(11) **EP 0 579 242 A2**
(43) Veröffentlichungstag der Anmeldung: **19.01.1994**
(21) Anmeldenummer: 93111434.2
(22) Anmeldetag: 16.07.1993
(51) Int. Cl.: B65B 5/06, B65G 47/74

(54) **Vorrichtung zum Einbringen von Packungen in einen Sammelbehälter**

(30) Priorität: 17.07.1992 DE 4223586; 04.05.1993 DE 4314566
(71) Anmelder: ROVEMA VERPACKUNGSMASCHINEN GMBH, 35463 Fernwald (DE)
(72) Erfinder: Hofmann, Rudolf, D-35452 Heuchelheim-Kinzenbach (DE); Hofmann, Peter, D-35444 Biebertal/Rodheim (DE); Klees, Winfried, D-35633 Lahnau/Dorlar (DE); Grüner, Wolfgang, D-74564 Crailsheim (DE); Görsdorf, Ralf, D-35444 Biebertal/Bieber (DE); Kammler, Roman, Dr., D-67547 Worms (DE); Junker, Bernd, D-35745 Herborn (DE); Schmitt, Reinhold, D-35396 Giessen/Wieseck (DE); Seidel, Harald, D-74564 Crailsheim (DE); Baur, Walter, Dr., D-63584 Gründau (DE)
(74) Vertreter: Missling, Arne, Dipl.-Ing.

(57) **Zusammenfassung**

Die Erfindung bezieht sich auf eine Vorrichtung zum Einbringen von Packungen (2), insbesondere von Beuteln, in einen Sammelbehälter (14). Dabei werden die Packungen in einer Kassette (9) abgelegt, welche an den Armen eines Drehkreuzes (11) angeordnet ist. Die Kassette (9) ist an einer ihren Längsseiten offen, um das Überstülpen eines Sammelbehälters (14) zu ermöglichen. Durch Schwenken der Kassette (9) kann der gefüllte Sammelbehälter (14) abgezogen und abtransportiert werden. Eine dabei verwendete Absenkeinrichtung ist universell auch bei anderen Förderaufgaben einsetzbar.

## Beschreibung

Die vorliegende Erfindung bezieht sich auf eine Vorrichtung zum Einbringen von Packungen, insbesondere Schlauchbeutelpackungen, in einen Sammelbehälter, mit einer Zuführung für die Packungen zu zumindest einer Kassette, wobei die Kassette an den Armen eines Drehkreuzes angeordnet ist und schrittweise zu verschiedenen Arbeitsstationen verfahren wird.

Derartige Sammelbehälter werden handelsüblich als Display-Packung oder, wie im folgenden, als Tray bezeichnet. Ein solcher Tray besteht im allgemeinen aus einem Unterteil mit Boden und Seitenwanden, in dem die einzelnen Packungen stehend untergebracht sind. Der Verschluß für den Transport erfolgt durch einen aufgestülpten Deckel, der bei der Aufstellung auf Regalen in Selbstbedienungsläden abgenommen wird. Der Kunde kann dann die Ware entnehmen, wobei die ordnungsgemäße Lage der einzelnen Packungen im Tray noch die zusätzliche Aufgabe einer optisch ansprechenden Präsentation wahrnimmt. Üblicherweise kommt für beide Teile des Trays ein Faltkarton zum Einsatz. Es ist aber auch durchaus möglich, diese stabiler und wiederverwendbar, etwa aus Kunststoff, herzustellen.

Beim Verpacken stellt sich für den Praktiker immer wieder das Problem, daß das Packungsgut in einer flexiblen Packung bei dessen Überführung in eine senkrechte Position dazu neigt, diese tropfenförmig aufzubauchen. Dadurch ist ein erheblich größerer Sammelbehälter vonnöten, als die Packung eigentlich erfordert, wenn ein einwandfreier Abpackprozeß gewährleistet sein soll.

Ein Sammelbehälter dieser Art sowie eine Vorrichtung zum Einbringen von Schlauchbeutelpackungen in einen solchen Sammelbehälter beschreibt die DE-PS 31 13 045. Die von einer Schlauchbeutelmaschine produzierten Packungen werden hierbei in aufrechter Position in ein Magazin eingebracht, dessen Schächte von unten durch den Boden des Trays abgeschlossen werden. Nach vollständiger Füllung des Magazins gleiten die Packungen beim Absenken des Sammelbehälters aus den Magazinfächern heraus und stützen sich dabei auf dem Boden des Trays ab. Der auf dieser Weise gefüllte Sammelbehälter wird anschließend abtransportiert. Bei dieser Vorrichtung ist es von Nachteil, daß die einzelnen Magazinfächer einen zusätzlichen Raumbedarf für den Tray erfordern, so daß auch ein Mehrbedarf an Verpackungsmaterial anfällt, und daß die Packungen vor dem Einbringen in den Sammelbehälter eine annähernd senkrechte Lage einnehmen, wodurch insbesondere leicht fließende Güter eine tropfenförmige Ausbauchung der Packung verursachen. Hier kann auch die vorgesehene Egalisiervorrichtung über dem Magazin nur unzureichend Abhilfe schaffen, so daß ein Verklemmen der Packungen ober- oder innerhalb des Magazinschachtes nicht immer zu verhindern ist.

Eine weitere aus der DE-OS 31 18 076 bekannt gewordene derartige Vorrichtung versucht, dieses Problem zu lösen, indem die Packungen horizontal gestapelt und in den Tray eingebracht werden. Hierbei bedient man sich eines Drehkreuzes, an dessen Armen (an deren Enden) sogenannte Hohldorne angebracht sind. Die ankommenden Packungen werden in einer ersten Stellung des Drehkreuzes mittels einer Übergabestation in einen unterhalb des jeweiligen Hohldornes angeordneten Schacht eingebracht. Die Übergabestation besitzt zwei im gegensinnigen Drehsinn umlaufende Revolver mit je vier drehbar gelagerten, horizontal ausgerichteten Platten.

Nachdem die erforderliche Anzahl von Packungen zugeführt ist, wird der gesamte Stapel mittels einer Hubvorrichtung in seine endgültige Stellung im Hohldorn angehoben. Nach Verschließen des Hohldornes durch Klappen verfährt das Drehkreuz in eine zweite Stellung, in der der Zuschnitt für den Tray gegen die Unterseite des Hohldornes gelegt und anschließend um dessen Seitenwände gefaltet wird. Nach einem weiteren Schaltschritt schiebt ein Stempel den Packungsstapel mitsamt dem Tray vom Hohldorn ab nach unten.

Bei dieser Vorrichtung ist es nicht möglich, Packungen in Trays der obengenannten Art zu verpacken, da der Tray auf der dem Trayboden gegenüberliegenden Seite verschlossen sein muß. Weiterhin muß beim Einbringen der Packungen eine mit der Anzahl bereits abgestapelter Packungen zunehmende Kraft überwunden werden, die durch die Reibungskraft zwischen dem Packungsstapel und den Hohldornwänden und durch einen zusätzlichen Gewichtskörper weiterhin vergrößert wird. Hinzu kommt, daß nach Wegschwenken der Hubplatten der gesamte Packungsstapel eine gewisse Wegstrecke nach unten wegsackt, bis dieser auf die nächste einzubringende Packung auftrifft. Dieser Nachteil macht sich insbesondere bei druckempfindlichem Packungsgut bemerkbar, bewirkt aber darüberhinaus auch eine erhebliche Leistungsbegrenzung.

Der Erfindung liegt die Aufgabe zugrunde, eine Vorrichtung der eingangs genannten Art zu schaffen, bei der die Nachteile des Standes der Technik überwunden werden und die Packungen in waagerechter Position mit hoher Leistung zuverlässig in einen Tray eingefüllt werden können. Darüberhinaus hat sich die Erfindung die Aufgabe gestellt, eine dazu erforderliche Absenkeinrichtung so auszubilden, daß sie generell zum schonenden Absenken einzelner Packungen auf ein Förderband niedrigeren Levels geeignet ist.

Diese Aufgabe wird erfindungsgemäß dadurch gelöst, daß die Packungen von oben in die Kassette einfüll- und darin stapelbar sind, daß die Kassette an ihrer nach außen weisenden Seite offen ist, daß von dieser Seite der Sammelbehälter, insbesondere ein vorgefertigter Tray, auf die Kassette aufschiebbar ist und daß die Kassette mitsamt dem Packungsstapel und dem Sammelbehälter in eine waagerechte Position zum Abtransport des Sammelbehälters drehbar ist, wobei dessen offene Seite nach oben weist.

Durch die erfindungsgemäße Vorrichtung ist es möglich, daß jede Packung einer geringstmöglichen Belastung ausgesetzt wird, und somit eine unzulässige Verformung nicht auftreten kann. Die Packung, insbesondere ein Beutel, behält dadurch ihre Form, die sie bei Eintritt in die Vorrichtung erhalten hat. Vorteilhafterweise wird man in der Zuführung eine Egalisiervorrichtung vorsehen, die eine gleichmäßige Verteilung des Füllgutes in einer flexiblen Verpackung bewirkt. Dadurch kann der Packmaterialeinsatz für den Tray auf ein Minimum beschränkt werden.

Eine zusätzliche Absenkeinheit unterstützt die produktschonende Behandlung der Packungen. Die eine Plattform bildenden Rechen greifen paarweise in die Kassette ein und senken den Packungsstapel kontinuierlich oder stufenweise nach unten ab. Dadurch legt die jeweils einzubringende Packung eine minimale Fallhöhe zurück, womit gleichzeitig eine bessere Kontrolle des Übergabeverhaltens ermöglicht wird.

Durch die Zuführung der Packungen von oben in die Stapelkassette wird der Nachteil des Standes der Technik insofern überwunden, als die Packung beim Ablegen im Stapel nicht mehr das Gewicht der vorhergehenden Packungen überwinden muß. Außerdem ergeben sich in vielfältiger Hinsicht für die Übergabestation erhebliche konstruktive Vereinfachungen.

Weiterhin ist es dadurch, daß die nach außen weisende Wand der Kassette wegfällt, überhaupt erst möglich, die Packungen in einen Tray waagerecht einzubringen. Durch Aufschieben des vorgefertigten Trays auf die Kassette wird eine Reibung zwischen dem Tray und dem Packungsstapel verhindert. Flexible Packungen gelangen also im egalisierten Zustand in den Tray, so daß die anschließenden Arbeitsschritte auf das Verpackungsverhalten keinen Einfluß mehr ausüben und sich die Packungen vielmehr gegenseitig abstützen.

Von besonderem Vorteil ist bei dieser Vorrichtung, daß der Tray im bereits vorgefertigten Zustand auf die Kassette geschoben wird. Das in der DE-OS 31 18 076 gezeigte sogenannte "Wrap-around"-Verfahren besitzt gerade beim formschlüssigen Verpacken von Packungen in Trays den Nachteil, daß die frischen Verklebungen dem inneren Druck der Packungen nicht standhalten und sich wieder lösen. Durch die Herstellung in einer separaten Einheit ist dagegen der Kleber so weit abgebunden, daß eine hochbelastbare Verbindung zwischen den Laschen entsteht. Außerdem ergibt sich durch diesen Vorgang der Vorteil, daß dem Tray mit den Kassettenwänden immer eine feste Querschnittsfläche angeboten wird, wodurch auch der Tray gegen das Anstoßen an die Packungen geschützt wird. Die Wandstärke der Kassettenwände, die Positioniergenauigkeit des Drehsterns sowie die Maßhaltigkeit des Trays bestimmen nun im wesentlichen das Verhältnis der Querschnittsflächen, welches nach Einstellung der Maschine auf die vorgegebenen Packmaße konstant ist.

In einer vorteilhaften Ausgestaltung ist die Kassette gegenüber dem Lot mit ihrem oberen Ende zu der Drehachse des Drehkreuzes hin um einen bestimmten Winkel geneigt, vorzugsweise um 30°. Diese Maßnahme gewährleistet beim Schwenken der gefüllten Kassette, daß der Packungsstapel gegenüber den wirkenden Zentrifugalkräften immer seine Form und Position behält und nicht zusammenbricht. Beim Verpacken von Beuteln läßt sich dieser Vorteil insbesondere dadurch ausnützen, daß diese vor dem Einlaufen in den Sammelpacker um 180° gedreht werden, so daß die tropfenförmige Ausbauchung in Transportrichtung gesehen nach hinten weist. Leicht fließende Füllgüter sind dann in der Lage, innerhalb der Kassette durch deren Schrägstellung sich zur Drehachse hin zu verteilen und so den Egalisierungsprozeß zu unterstützen.

In einer weiteren Ausführungsform ist es möglich, mehrere Packungen parallel in die Kassette zu übergeben und abzustapeln. Dadurch ist es mit einfachen Mitteln möglich, im Tray mehrere parallele Reihen von Packungen unterzubringen.

In einer besonders vorteilhaften Ausgestaltung sind weitere Egalisierungsmittel im Bereich der Kassette in Form von Vibratoren o.ä. vorgesehen, die den Packungsstapel während des Stapelvorgangs zusätzlich in seiner Höhe verringern.

Dieser Vorgang kann weiterhin durch eine von oben wirkende Druckplatte unterstützt werden, so daß der Tray einen unter innerem Druck stehenden Packungsstapel aufnimmt, wodurch das absolute Minimum an Packmaterial erreicht wird.

Bezüglich einer Vorrichtung zum Absenken von Packungen, insbesondere Schlauchbeutelpackungen, mittels einer Absenkeinrichtung von einem Antransportband auf das niedriger Level eines Abtransportbandes wird die Aufgabe erfindungsgemäß dadurch gelöst, daß eine Prallplatte vorgesehen ist, die die Förderung einer Packung durch das Antransportband in Förderrichtung der Packung begrenzt, daß die Absenkeinrichtung mindestens zwei waagerechte, rechenförmige Plattenpaare umfaßt, deren Platten zueinander spiegelbildlich angeordnet sind und synchron spiegelbildlich zueinander bewegt werden, daß die Absenkeinrichtung so bewegbar ist, daß ein Plattenpaar die Ablage für eine Packung gerade dann bildet, wenn diese an der Prallplatte anschlägt, und daß das Plattenpaar nach dem Absenken die Packung gerade dann freigibt, wenn diese ohne Schaden auf das Abtransportband auflegen kann, und daß die Seitenwände eines Absenkschachtes ebenfalls rechenförmig und im wesentlichen senkrecht ausgebildet sind und zwar so, daß die rechenförmigen Platten des Plattenpaares durch die Seitenwände in den Absenkschacht greifen können.

Eine solche Absenkeinrichtung kann sowohl in Verbindung mit der oben beschriebenen Vorrichtung zum Einbringen von Packungen in einen Sammelbehälter verwendet werden, als auch zum bloßen Absenken, beispielsweise auf ein gesteuertes Förderband zu einer Umverpackungsstation. Bei hoher Geschwindigkeit der Förderung ist dabei ein schonendes Umsetzen erzielbar. Dabei können relativ große senkrechte Abstände überwunden werden, je nach Konstruktion der Absenkeinrichtung. Trotz der relativ komplizierten Kinematik kommt man mit einem einzigen Antrieb aus.

Eine besonders einfache Konstruktion ergibt sich, wenn die Platten jeweils an ihrem dem Absenkschacht abgewandten Ende um eine waagerechte, senkrecht auf der Förderrichtung der Packungen stehenden Schwenkachse drehbar gelagert und die Schwenkachsen für die Platten auf einer gemeinsamen, um eine ortsfeste, waagerechte Drehachse drehbaren Drehscheibe befestigt sind. Die Drehachse wird dabei zweckmäßigerweise so gelegt, daß sie von allen Schwenkachsen den gleichen Abstand hat. Die Anzahl der Schwenkachsen ist an sich beliebig, die Anordnung von drei Schwenkachsen hat sich als günstig gezeigt. Um eine komplizierte Steuerung der verschiedenen Achsen zu vermeiden, ist es zweckmäßig, wenn ein gemeinsamer Antrieb für die Platten und die in zu diesen entgegengesetzter Drehrichtung angetriebene Drehscheibe vorgesehen ist. Auf diese Weise ist das Erfordernis, daß bei ständig sich drehender Drehscheibe die Platten stets waagerecht gehalten werden, am leichtesten erfüllbar. Bei der Verwendung von drei Schwenkachsen ist es günstig, wenn die Scheiben-Fläche der Drehscheibe ein gleichseitiges Dreieck bildet, in dessen Zwickeln die Schwenkachsen angeordnet sind, von denen dann je zwei mit der Drehachse ein Dreieck mit einem Scheitelwinkel von 120° bilden.

Es ist vorteilhaft, wenn die Seitenwände des Absenkschachtes Einführungsschrägen für die mit dem Antransport ankommenden Packungen aufweisen, so daß eine reibungslose Zuführung gewährleistet ist. Eine besonders einfache Konstruktion ergibt sich für die Kinematik der Drehscheibe, wenn die Platten mittels eines gezahnten Treibriemens antreibbar sind; auf diese Weise werden die Platten synchron angetrieben, was durch ein Ritzel erfolgen kann, das an einem auch ein Antriebsritzel für die Drehscheibe enthaltenden Motorantrieb angebracht sein kann.

Es ist vorteilhaft, wenn die Zinken der rechenförmigen Platten einzeln aus der Platten-Ebene klappbar angeordnet sind, weil auf diese Weise die nutzbare Größe der Platten-Fläche bedarfsgerecht geändert werden kann.

Es ist leicht zu erkennen, daß die Aufgabenstellung für die Förderung der Packungen mit relativ einfachen Mitteln gelöst worden ist, ohne daß dabei die erforderliche Gleichförmigkeit des Absenkens und Übergangs von einem Förderband auf das andere verletzt wäre. Insbesondere Schlauchbeutelpackungen werden dabei sehr schonend transportiert, so daß Beschädigungen weitgehend vermieden werden.

Die Erfindung wird nachstehend anhand der Zeichnung an einem Ausführungsbeispiel näher erläutert. Es zeigen:
- Fig. 1: eine Seitenansicht einer erfindungsgemäßen Vorrichtung zum Einbringen von Packungen in einen Sammelbehälter,
- Fig. 2: eine Draufsicht auf Fig. 1,
- Fig. 3: eine Einzelheit A aus Fig. 1, um 90° gedreht,
- Fig. 4: eine Variante einer Einzelheit B aus Fig. 3, bei der eine einfache Absenkung der Packungen erfolgt,
- Fig. 5: einen Schnitt C-C aus Fig. 4,
- Fig. 6: verschiedene Positionen einer in Fig. 4 rechten Platte,
- Fig.7: einen schematischer Antrieb der Schwenkachsen,
- Fig. 8a und Fig. 8b: zwei verschiedene gegenseitige Zuordnungen der Platten eines Plattenpaares, sämtlich in schematischer Darstellung.

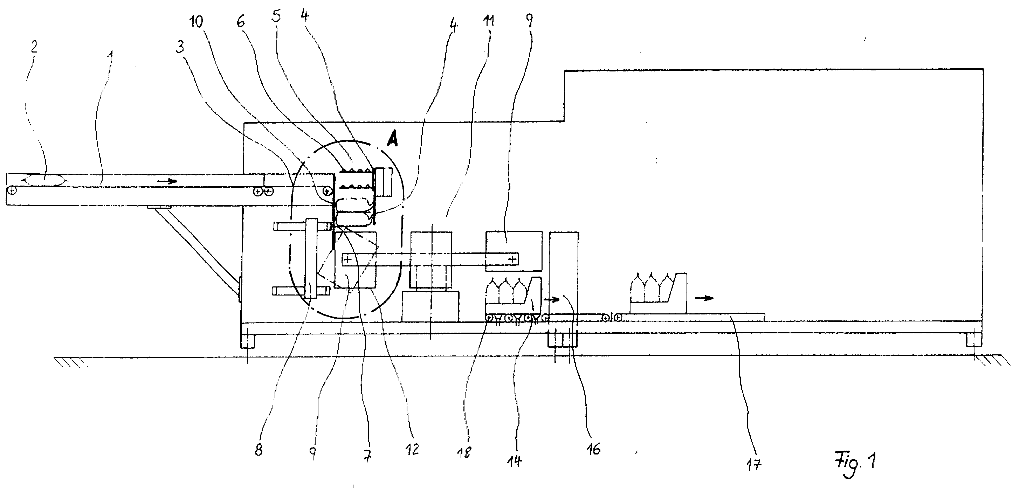

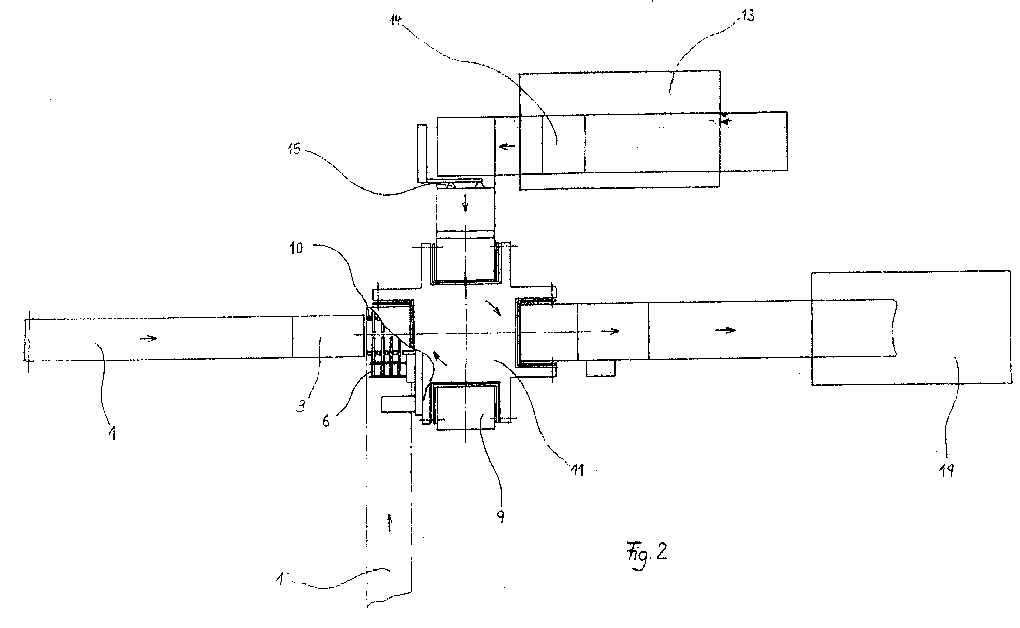

Entsprechend Fig. 1 und 2 transportiert ein Förderband 1 die von nicht abgebildeten Verpackungsmaschinen erzeugten Packungen 2 zu einem Beschleunigerband 3. Die Einstellung der Geschwindigkeit des Beschleunigerbandes 3 erfolgt so, daß die Packung 2 möglichst sanft an eine Stoßdämpferplatte 4 der Übergabestation 5 anläuft.

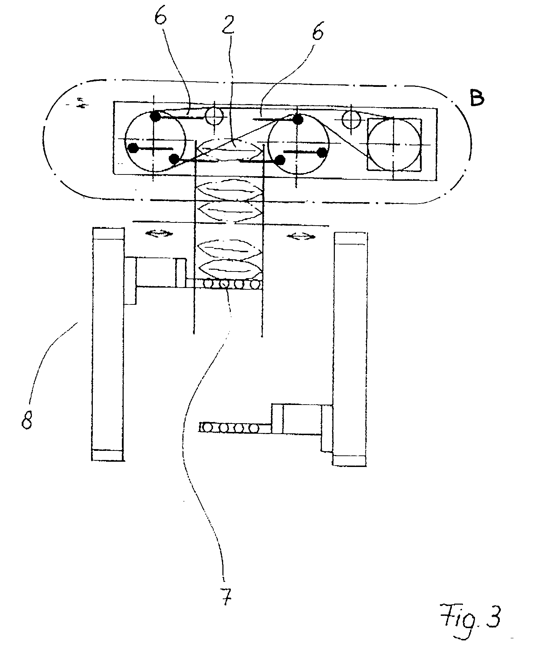

Eine genauere Darstellung der Packungsübergabe und Stapelung gibt Fig. 3 wieder. Die zugeführten Packungen 2 kommen jeweils auf einem rechenförmigen Plattenpaar 6 zur Auflage. Die Platten 6a; 6b sind auf jeweils gegenüberliegenden Drehscheiben 20 so angeordnet, daß sie bei einer vollen Umdrehung immer horizontal ausgerichtet sind. Die Packung 2 erreicht das Plattenpaar 6 immer gerade dann, wenn die Platten 6a; 6b sich einander nähern und der Abstand zwischen beiden wesentlich kleiner als die Packungsbreite bzw. -länge ist. Das Plattenpaar 6 bewegt sich nun nach unten und aufeinander zu, bildet zunächst eine geschlossene Fläche, um dann im weiteren Verlauf wieder getrennt zu werden und so die Packung 2 nach unten abzugeben. Gleichzeitig mit dem Abwurf schließt sich in der oberen Position ein weiteres Plattenpaar 6 zur Aufnahme der nächsten Packung 2. Die rechenförmige Ausführung der Platten 6a; 6b ermöglicht bei dem beschriebenen Vorgang ein Durchgreifen der durch Stäbe 10 gebildeten Seitenwände des Stapelschachtes. Darüberhinaus ist auch denkbar, andere Übergabesysteme, wie z. B. Zellrad, Rechenrad, Drehsterne o. ä., einzusetzen.

Eine aus einem Rechen 7 bestehende Absenkeinheit 8 nimmt die Packung 2 auf und verfährt diese schrittweise oder kontinuierlich nach unten, um die darauffolgende Packung 2 aufnehmen zu können. Die Absenkeinheit 8 ist innerhalb einer Kassette 9 angeordnet, die die Packung 2 an drei Seiten umgibt. Die Stirnseite des Zwischenspeichers besteht ebenfalls aus den bereits oben beschriebenen Stäben 10, damit der Rechen 7 ins Innere der Kassette 9 eingreifen und eine den Packungsstapel abstützende, eine Plattform bildende Fläche bilden kann. Hat die Absenkeinheit 8 eine vorbestimmte Anzahl Packungen 2 aufgenommen, so kann je nach Stapelhöhe der Rechen 7 schon innerhalb der Kassette 9 oder erst außerhalb nach außen geschwenkt werden, um in gegensinniger Bewegung das obere Ende der Kassette 9 für eine erneute Aufnahme von Packungen 2 zu erreichen.

Die Kassette 9 selbst ist an den Armenden eines Drehkreuzes 11 bekannter Bauart angeordnet und um ca. 30° gegen das Lot geschwenkt. Eine Anpassung an die vorgegebene Stapelhöhe ist nicht notwendig, da der Stapel immer auf den Kassettenboden 12 abgesenkt wird, welcher ebenfalls aus einzelnen Stäben gebildet wird. Nach Ablegen eines kompletten Packungsstapels wird die Kassette 9 durch Drehung des Drehkreuzes 11 um 90° in eine zweite Station bewegt. In einer separaten Aufricht- und Klebevorrichtung 13 wird der Tray 14 vorgefertigt und zu einer weiteren Übergabestation transportiert. Eine Saugvorrichtung 15 ergreift den Tray 14 von unten am Boden und schiebt diesen auf die den Packungs-Stapel enthaltende Kassette 9.

Nach Entfernung der Sauger bewegt das Drehkreuz 11 die Kassette 9 zu einer dritten Arbeitsstation. Die Kassette 9 wird nun in eine horizontale Lage gebracht in der Art, daß die offene Seite des Trays 14 nach oben weist. Eine unter der gedrehten Kassette 9 angeordnete Hubvorrichtung 16 unterstützt den Tray 14 an dessen Bodenteil, um dessen unkontrolliertes Herausgleiten zu verhindern. Durch Absenken der Hubvorrichtung 16 wird der Tray 14 aufgrund des Eigengewichtes des Packungsstapels und des angesaugten Traybodens aus der Kassette 9 gedrückt bzw. bei Einsatz von zusätzlichen Saugern gezogen. Angetriebene Rollen 18 transportieren den Tray 14 in Richtung eines separaten Abtransportbandes 17. Die Hubvorrichtung 16 hebt dann wieder an und übernimmt den nächsten Tray 14. Anschließend erfolgt der Transport zu einer weiteren separaten Arbeitsstation 19, wo die oben offene Seite mit einem vorgefertigten Deckel verschlossen wird.

Nach Abgabe des gefüllten Trays 14 transportiert eine weitere Drehung des Drehkreuzes 11 die Kassette 9 zu einer vierten Station, wo sie durch Zurückschwenken ihre Ausgangsstellung für eine weitere Befüllung einnnimmt.

An dieser Stelle sei angemerkt, daß die Arbeitsschritte nicht unbedingt auf die oben genannten Stationen beschränkt sein müssen. So kann z. B. die dritte Station einen zusätzlichen Arbeitsschritt beeinhalten, z. B. das Einlegen eines Prospektes o. ä., so daß das Ablegen des Trays 14 und das Zurückschwenken der Kassette 9 in ihre Ausgangsstellung in der vierten Arbeitsstation erfolgen. Weiterhin ist aus der Fig. 2 zu ersehen, daß die Zuführung der Packung zur Übergabestation 5 entweder senkrecht oder parallel in Linie zum Arm des Drehkreuzes 11 erfolgen kann, der die gerade zu befüllende Kassette 9 trägt. Es ist auch denkbar, in der Übergabestation 5 die Packungen 2 mehrfach hintereinander abzulegen. Durch Anordnung eines beweglichen Zwischenspeichers unterhalb der Übergabestation 5 ist es auch möglich, mehrere Packungen 2 nebeneinander abzulegen. Je nach konstruktiver Auslegung der Zuführung und der Übergabestation kann nahezu jedes beliebige Ablagemuster erreicht werden, was für die gesamte Anlage ein Höchstmaß an Flexibilität bedeutet.

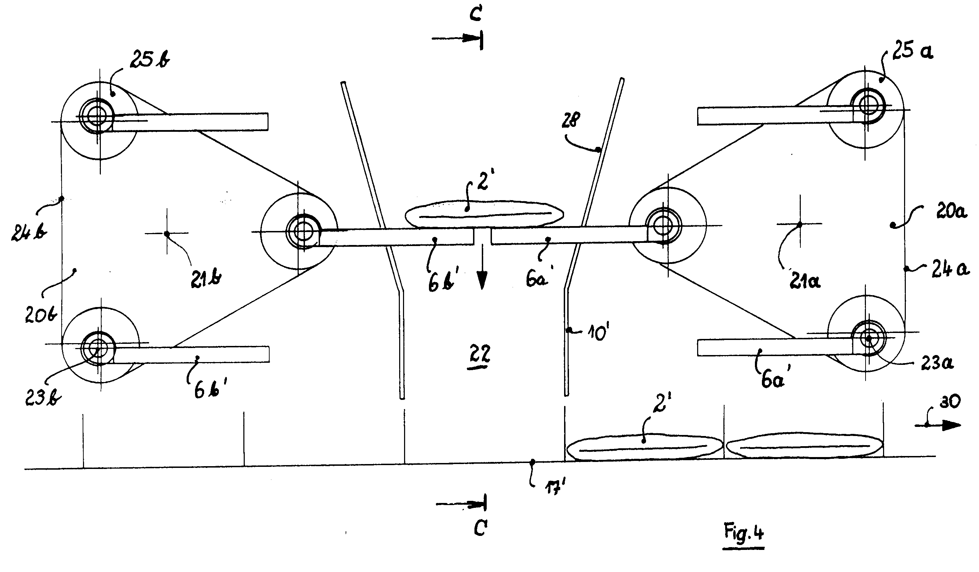

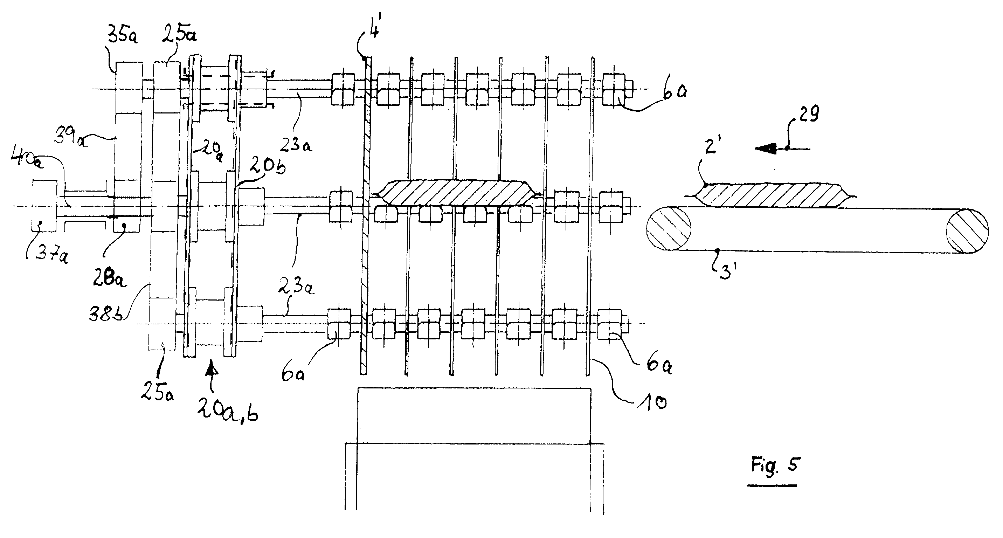

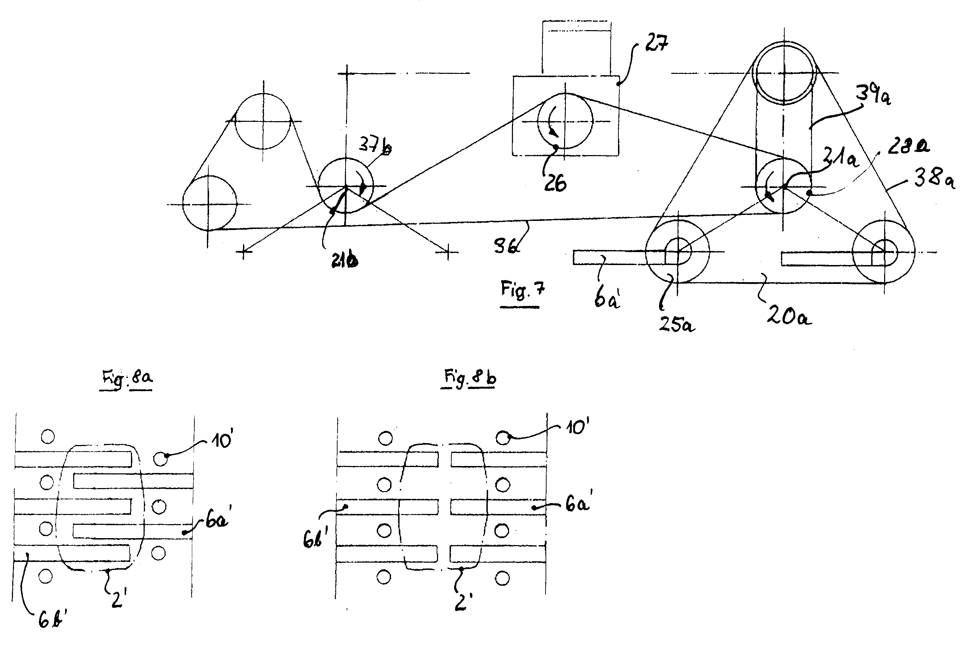

Die Einzelheiten eines Ausführungsbeispieles einer erfindungsgemäßen Absenkeinrichtung sind in den Fig. 4 bis 8 gezeigt. Zum besseren Verständnis mit den Anordnungen der Fig. 1 bis 3 sind gleiche Bauteile mit gleichen Bezugsziffern versehen, die aber zur besseren Unterscheidung gestrichen verwendet werden. In der Fig. 4, die eine Seitenansicht einer erfindungsgemäßen Absenkeinrichtung zeigt, sind zwei um ortsfeste, waagerechte Drehachsen 21a; 21b drehbare Drehscheiben 20a; 20b dargestellt. Die Drehscheiben sind dabei als gleichseitige Dreiecke mit abgerundeten Ecken ausgeführt, die zueinander spiegelbildlich auf beiden Seiten eines Absenkschachtes 22 angeordnet sind. In den Zwickeln der Drehscheiben sind Schwenkachsen 23a; 23b vorgesehen, um die die Platten 6a'; 6b' schwenkbar sind. Es ist zu erkennen, daß die Schwenkachse gegenüber den Scheitelpunkten der Zwickel etwas versetzt angeordnet sind, um durch diese geringfügige Exzentrizität den die Ritzel 25a; 25b verbindenden Zahnriemen 24a; 24b spielfrei einzustellen. Die Drehscheiben 20a; 20b werden, wie Fig. 7 zeigt, von einem Motor 27 angetrieben, der einen Zahnriemen 36 antreibt. Dieser Zahnriemen 36 treibt ein Ritzel 37a bzw. 37b an, das drehfest mit der Drehscheibe 20a bzw. 20b verbunden ist. Von den Ritzeln 37a; 37b ist in Fig. 7 lediglich das Ritzel 37b zu sehen. Das Ritzel 37a sitzt hinter dem Ritzel 28a. Die Drehscheiben 20a und 20b rotieren somit gegensinnig. Die auf den Drehscheiben 20a; 20b angeordneten Ritzel 25a; 25b sind relativ zu den Drehscheiben 20a; 20b drehbar. Diese Ritzel sind untereinander über einen Zahnriemen 38a; 38b verbunden, der in Fig. 7 mit der Kontur der Drehscheiben 20a zusammenfällt. Drehfest mit einem der Ritzel 25a ist ein weiteres Ritzel 35a; 35b verbunden, das über einen Zahnriemen 39a; 39b mit einem ortsfest angeordneten Ritzel 28a; 28b verbunden ist. Das Ritzel 28a ist in Fig. 5 und 7 eingezeichnet. Es wird von der Antriebswelle 40a; 40b durchgriffen, die mit der Drehscheibe 20a; 20b verbunden ist. Beim Drehen der Drehscheibe 20a mit Hilfe des Motors 27 werden somit die Ritzel 25a; 25b gleichsinnig mit verschwenkt, so daß die Platten 6a', 6b' ihre Stellung im Raum und damit auch zueinander ständig beibehalten. Es versteht sich, daß der in Fig. 7 für eine Drehscheibe 20a gezeigte Antrieb spiegelbildlich auch für die Drehscheibe 20b angewendet wird unter Verwendung des gleichen Ritzels 26. Der Absenkschacht 22 der Fig. 4 ist von Seitenwänden 10' umgeben, die ebenso rechenförmig ausgebildet sind wie die Platten 6a'; 6b'. Sie enden nach oben in einer Einführungsschräge 28, so daß sich der Absenkschacht 22 nach oben öffnet, um eine bequeme Einführung der Packungen 2' zu gewährleisten. Am unteren Ende des Absenkschachtes 22 ist ein Abförderband 17' schematisch eingezeichnet mit den abzufördernden Packungen 2'; seine Förderrichtung 30 wird sich im allgemeinen von der Förderrichtung 29 unterscheiden.

In Fig. 5 ist ein Antransportband 3' eingezeichnet, das die Packungen 2' in den Bereich der erfindungsgemäßen Absenkeinrichtung fördert. Dabei stoßen die Packungen 2' in Förderrichtung 29 gegen eine Prallplatte 4', die eine waagerechte Förderung zunächst beendet. Gleichzeitig wird die dort angelangte Packung 2' von einem fast zusammengeführten Plattenpaar 6a', 6b' unterfangen und in dem Absenkschacht 22 nach unten abgesenkt. Dort öffnet sich das Plattenpaar 6a', 6b' so weit, daß die Packung auf dem Abförderband 17' aufliegt und in Förderrichtung 30 weiterbewegt wird.

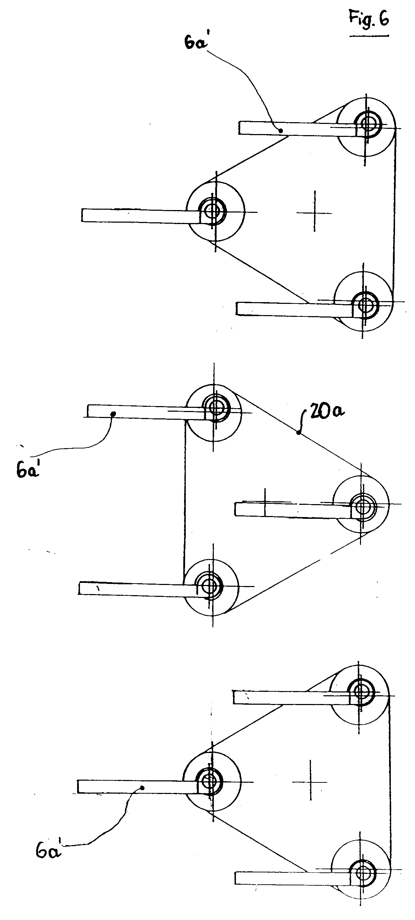

In der Fig. 6 ist der Bewegungsablauf der Platten 6a' an einer Drehscheibe 20a bei einem Drehwinkel von 120° dargestellt. Die Rechen der Platten 6a'; 6b' können entsprechend den Fig. 8a und 8b miteinander fluchten oder gegeneinander versetzt sein; von der gewählten Anordnung ist auch abhängig, wie die Stäbe 10' des Absenkschachtes 22 anzuordnen sind. Welche der beiden Anordnungen man wählen wird, hängt im wesentlichen von der Konsistenz des Packungsgutes in der Packung 2' ab, da bei versetzter Anordnung der Rechen eine größere Auflagefläche erzielbar ist als bei fluchtender.

Die Erfindung ist nicht auf das hier beschriebene Ausführungsbeispiel beschränkt; vielmehr ergeben sich für den Fachmann im Rahmen der Erfindung vielfältige Abwandlungs- und Modifikationsmöglichkeiten.

## Patentansprüche

1. Vorrichtung zum Einbringen von Packungen (2), insbesondere Schlauchbeutelpackungen, in einen Sammelbehälter (14), mit einer Zuführung für die Packungen (2) zu zumindest einer Kassette (9), wobei die Kassette (9) an den Armen eines Drehkreuzes (11) angeordnet ist und schrittweise zu verschiedenen Arbeitsstationen verfahren wird, dadurch gekennzeichnet, daß die Packungen (2) von oben in die Kassette (9) einfüll- und darin stapelbar sind, daß die Kassette (9) an derjenigen Seite offen ist, die parallel zu der Drehachse des Drehkreuzes (11) und dieser abgewandt ist, daß von dieser Seite her der Sammelbehälter (14) an die Kassette (9) anlegbar ist, und daß die Kassette (9) mitsamt den Packungen (2) und dem Sammelbehälter (14) in eine waagerechte Position zum Abtransport des Sammelbehälters (14) drehbar ist, wobei dessen offene Seite nach oben weist.

2. Vorrichtung nach Anspruch 1, dadurch gekennzeichnet, daß ein vorgefertigter Sammelbehälter (14) auf die Kassette (9) aufschiebbar ist.

3. Vorrichtung nach Anspruch 1, dadurch gekennzeichnet, daß ein flacher Zuschnitt an die Kassette (9) anlegbar und aus diesem ein Sammelbehälter (14) faltbar ist.

4. Vorrichtung nach einem der Ansprüche 1 bis 3, dadurch gekennzeichnet, daß innerhalb der Kassette (9) eine Absenkeinrichtung (8) zur Abstützung des zu bildenden Packungsstapels vorgesehen ist.

5. Vorrichtung nach Anspruch 4, dadurch gekennzeichnet, daß Abstützelemente (7) der Absenkeinrichtung (8) als Rechen ausgebildet sind.

6. Vorrichtung nach einem der Ansprüche 1 bis 5, dadurch gekennzeichnet, daß die Kassette (9) gegen eine Parallele zu der Drehachse des Drehkreuzes (11) schwenkbar ist.

7. Vorrichtung nach einem der Ansprüche 1 bis 6, dadurch gekennzeichnet, daß die Wände und der Boden der Kassette (9) durch einzelne Stäbe (10) gebildet werden.

8. Vorrichtung nach einem der Ansprüche 1 bis 7, dadurch gekennzeichnet, daß unterhalb der Arbeitsstation zum Abziehen des gefüllten Sammelbehälters (14) Mittel zum Unterstützen dessen Bodens vorgesehen sind.

9. Vorrichtung nach Anspruch 8, dadurch gekennzeichnet, daß die Mittel zum Unterstützen des Bodens, insbesondere eine Abstützplatte (17), zwischen den Bändern eines geteilten Abtransportbandes (18) angeordnet sind.

10. Vorrichtung nach einem der Ansprüche 1 bis 9, gekennzeichnet durch Mittel zum Auflegen eines ebenen Deckel-Zuschnitt-Körpers auf den gefüllten Sammelbehälter (14) und zum Falten des Deckels.

11. Vorrichtung zum Absenken von Packungen (2'), insbesondere von Schlauchbeutelpackungen, mittels einer Absenkeinrichtung (8') von einem Antransporthand (3') auf das niedrigere Level eines Abtransportbandes (17'), gekennzeichnet durch die folgenden Merkmale:
a) es ist eine Prallplatte (4') vorgesehen, die die Förderung einer Packung (2') durch das Antransportband (3') in Förderrichtung der Packung (2') begrenzt;
b) die Absenkeinrichtung (8') umfaßt mindestens zwei waagerechte, rechenförmige Plattenpaare (6'), deren Platten (6a'; 6b') zueinander spiegelbildlich angeordnet sind und synchron spiegelbildlich zueinander bewegt werden;
c) die Absenkeinrichtung (8') ist so bewegbar ausgebildet, daß ein Plattenpaar (6') die Ablage für eine Packung (2') gerade dann bildet, wenn diese an der Prallplatte (4') anschlägt, und daß das Plattenpaar (6') nach dem Absenken die Packung (2') gerade dann freigibt, wenn diese ohne Schaden auf das Abtransportband (17') auflegen kann;
d) die Seitenwände (10') eines Absenkschachtes (22) sind rechenförmig und im wesentlichen senkrecht ausgebildet und zwar so, daß die rechenförmigen Platten (6a'; 6b') des Plattenpaares (6') durch die Seitenwände (10') in den Absenkschacht (22) greifen können.

12. Vorrichtung nach Anspruch 11, dadurch gekennzeichnet, daß die Platten (6a'; 6b') jeweils an ihrem dem Absenkschacht (22) abgewandten Ende um eine waagerechte, senkrecht auf der Förderrichtung (29) der Packungen (2') stehenden Schwenkachse (25a; 25b) drehbar gelagert sind.

13. Vorrichtung nach Anspruch 11 und 12, dadurch gekennzeichnet, daß die Schwenkachsen (25a; 25b) für die Platten (6a'; 6b') auf einer gemeinsamen, um eine ortsfeste, waagerechte Drehachse (21a; 21b) drehbaren Drehscheibe (20a; 20b) befestigt sind.

14. Vorrichtung nach Anspruch 11 bis 13, dadurch gekennzeichnet, daß ein gemeinsamer Antrieb (27) für die Platten (6a'; 6b') und die in zu diesen entgegengesetzter Drehrichtung angetriebene Drehscheibe (20a; 20b) vorgesehen ist.

15. Vorrichtung nach Anspruch 11 bis 14, dadurch gekennzeichnet, daß die Scheiben-Fläche der Drehscheibe (20a; 20b) ein gleichseitiges Dreieck bildet, in dessen Zwickeln (3) die Schwenkachsen (25a; 25b) angeordnet sind, von denen je zwei mit der Drehachse (21a; 21b) ein Dreieck mit einem Scheitelwinkel von 120° bilden.

16. Vorrichtung nach einem der Ansprüche 11 bis 15, dadurch gekennzeichnet, daß die Seitenwände (10') des Absenkschachtes (22) Einführungsschrägen (28) für die mit dem Antransportband (3') ankommenden Packungen (2') aufweisen.

17. Vorrichtung nach einem der Ansprüche 11 bis 16, dadurch gekennzeichnet, daß die Platten (6a'; 6b') mittels eines gezahnten Treibriemens (24a; 24b) antreibbar sind.

18. Vorrichtung nach einem der Ansprüche 11 bis 17, dadurch gekennzeichnet, daß die Zinken der rechenförmigen Platten (6a'; 6b') einzeln aus der Platten-Ebene klappbar angeordnet sind.
